Europäisches Patentamt

European Patent Office

Office européen des brevets

Veröffentlichungsnummer: **0 509 377 A1**

## EUROPÄISCHE PATENTANMELDUNG

Anmeldenummer: **92106022.4**

Anmeldetag: **07.04.92**

Int. Cl.5: **B29C 61/06**, H02G 15/18

Priorität: **18.04.91 DE 4112721**

Veröffentlichungstag der Anmeldung:
**21.10.92 Patentblatt 92/43**

Benannte Vertragsstaaten:
**AT BE CH DE ES FR GB IT LI NL SE**

Anmelder: **RXS Schrumpftechnik-Garnituren GmbH**
**Profilstrasse 4**
**W-5800 Hagen 1(DE)**

Erfinder: **Fröhlich, Franz-Fr.**
**Zum Hohenhof 13**
**W-5800 Hagen 1(DE)**

Vertreter: **Fuchs, Franz-Josef, Dr.-Ing.**
**Postfach 22 13 17**
**W-8000 München 22(DE)**

**Umhüllung aus polymerem Kunststoff für Gegenstände, insbesondere für elektrische Baugruppen oder Kabelverbindungen.**

Bei der Erfindung handelt es sich um eine Umhüllung (6) aus polymerem Kunststoff für Gegenstände (1), insbesondere für elektrische Baugruppen oder Kabelverbindungen, die aus mindestens zwei in einem Folienverbund (2 - 3) flächenhaft fest miteinander verbundenen Folien (2, 3) besteht. Die eine, meist außen liegende Folie (2) ist vernetzt oder vernetzbar, während die innen liegende Folie (3) nicht oder wenig vernetzt bzw. vernetzbar ist, so daß in den Stoßstellenbereichen (4, 5) bei der Umhüllung (6) die nicht bzw. wenig vernetzten Folien (3) aufeinander liegen und durch Druckeinwirkung und/oder Wärmezufuhr gegenseitig verschmelzbar sind.

FIG 1

EP 0 509 377 A1

Die Erfindung betrifft eine Umhüllung aus polymerem Kunststoff für Gegenstände, insbesondere für elektrische Baugruppen oder Kabelverbindungen.

Aus der deutschen Offenlegungsschrift 30 40 864 ist eine Vorrichtung zum Verbinden und Umhüllen von Kabelverbindungen, insbesondere in einem Gehäuse für Elektronikbaugrupen, bekannt, bei der die Umhüllung aus einem polymeren Kunststoff gebildet wird, wobei diese Umhüllung schrumpfbar ist. Das Gehäuse wird auf die Baugruppe aufgeschrumpft und die überlappenden Bereiche der Umhüllung werden mit Hilfe eines Schmelzklebers abgedichtet und verklebt. Bei Verklebungen besteht jedoch die Gefahr, daß durch fehlerhaftes Aufschmelzen oder ungleichmäßige Kleberverteilungen Schadstellen entstehen, die unter Umständen zu Undichtigkeiten führen können.

Aufgabe der Erfindung ist nun, bei Umhüllungen aus polymerem Material Abdichtungen in den Trennbereichen zu schaffen, die eine zuverlässige Dichtigkeit ohne Verwendung von Zusatzmitteln gewährleisten. Die gestellte Aufgabe wird gemäß der Erfindung mit einer Umhüllung der eingangs erläuterten Art dadurch gelöst, daß mindestens zwei Folien aus polymerem Kunststoff flächenhaft miteinander zu einem Folienverbund verbunden sind, daß die Folien unterschiedlich vernetzungsfähig sind und daß in den Stoßstellen der Umhüllung jeweils die nicht oder zumindest wenig vernetzten Folien aufeinander liegen und daß die nicht oder zumindest wenig vernetzten Folien in den Stoßstellen miteinander durch Druck und/oder Wärmezufuhr verschweißbar sind.

Weiterhin ist Aufgabe der Erfindung, ein Verfahren zu entwickeln, mit dem eine dichte Umhüllung für Gegenstände geschaffen werden kann, wobei die Umhüllung nach der Lösung der oben gestellten ersten Aufgabe ausgebildet sein soll. Diese Aufgabe wird gemäß der Erfindung nach einem der Ansprüche 9 bis 11 gelöst.

Vorteile sind an Umhüllungen gemäß der Erfindung gegenüber dem Stand der Technik darin zu sehen, daß für die Abdichtung in den Verbindungsbzw. Stoßstellenbereichen keine zusätzlichen Mittel verwendet werden, so daß die Gefahr zur Undichtigkeit in diesen Bereichen nicht mehr besteht. Ungleichmäßige Aktivierung, unregelmäßige Verteilung oder Weglaufen des erwärmten Dichtungsmittels sind somit nicht mehr gegeben. Gemäß der Erfindung werden die zu verbindenden Bereiche bzw. Stoßstellen durch Druck und/oder Wärmezufuhr miteinander verschmolzen, so daß nach Beendigung dieses Vorganges eine relativ homogen ausgebildete Verbindung zwischen den beiden nicht bzw. wenig vernetzten Folien vorliegt. Diese Verschmelzung ist jedoch nur bei gering vernetzten oder nicht vernetzten polymeren Kunststoffmaterialien möglich. Da jedoch für die umhüllten Gegenstände ausreichende thermische und mechanische Festigkeit gefordert wird, ist es nötig, daß das Kunststoffmaterial in den erforderlichen Bereichen vernetzt sein muß. Diese beiden Forderungen werden nun bei der Umhüllung gemäß der Erfindung miteinander dadurch vereint, daß ein Folienverbund hergestellt wird, der aus einer vernetzten bzw. vernetzbaren Folie und einer wenig bzw. nicht vernetzten Folie gebildet wird. Die Verbindung der beiden Folien erfolgt entweder durch gegenseitige Verklebung mit wärmefesten Klebern, durch gegenseitiges Verpressen, zum Beispiel zwischen Walzen, wobei unter Umständen entsprechend geeignete Haftvermittler, wie z.B. Peroxide, verwendet werden können. Verwendet man für die eine, vorzugsweise bei der Umhüllung außen liegende Folie vernetzbares Material, so kann die Vernetzung auch am bereits hergestellten Folienverbund durchgeführt werden, wenn für die zweite Folie ein nicht oder schwer vernetzbares Material verwendet wird oder wenn die zweite Folie beim Vernetzungsvorgang gegen Vernetzung geschützt wird. Vorzugsweise werden möglichst verwandte Materialien verwendet, da dann die gegenseitige Haftung die wenigsten Probleme aufwirft. Solche Materialien sind beispielsweise Polyehtylene verschiedener Kettenlängen mit Zusätzen, die die Vernetzungsfähigkeit abschwächen bzw. verstärken. Nach dem Vernetzen kann der Folienverbund in eine dem zu umhüllenden Gegenstand entsprechende Vorform gebracht werden, wobei diese Vorform zweckmäßigerweise größer ist als die Endform. Durch Wärmezufuhr kann dann infolge der Vernetzung und der anschließenden Verformung eine Rückstellung, d.h. Schrumpfung, erfolgen, so daß ein dichter Sitz auf den Gegenstand hergestellt werden kann. Die Stoßstellen bei zusammengesetzten Formteilen werden dabei fest zusammengepreßt, so daß in diesen Stoßstellenbereichen eine gegenseitige Verschmelzung und damit eine ausreichende Dichtung hergestellt wird.

Die Erfindung wird nun anhand von zwei Figuren näher erläutert.

Figur 1    zeigt eine Umhüllung mit flanschartigen Ansätzen an den Stoßstellenbereichen der Randregionen.

Figur 2    zeigt eine stumpfe Verbindung von gegenüberliegenden Randregionen der Umhüllung.

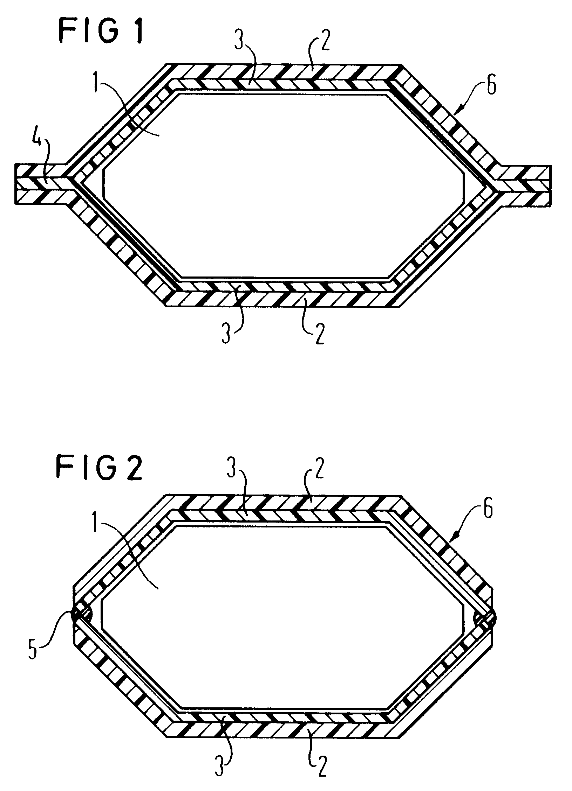

Die Figur 1 zeigt einen zu umhüllenden Gegenstand 1, zum Beispiel eine elektronische Baugruppe oder eine Kabelverbindung, die von einer dichten Umhüllung 6 umgeben ist. Diese Umhüllung 6 besteht aus einem Folienverbund 2 - 3, wobei hier zwei halbschalenartige Vorformen an den seitlichen Stoßstellen 4 zusammengefügt werden. Diese Stoßstellenbereiche 4 sind hier als flanschartige Ansätze ausgebildet. Der Folienverbund 2 - 3 besteht aus einer äußeren, vernetzten bzw. vernetzbaren Folie 2 und aus einer inneren, nicht oder nur wenig vernetzten bzw. vernetzbaren Folie 3. Diese beiden Folien 2 und 3 sind fest haftend miteinander verbunden. Beim Zusammenfügen dieser beiden Vorformen treffen in den Stoßstellenbereichen 4 die inneren Folien 3 aufeinander. Da diese Folien 3 nicht oder nur wenig vernetzt sind, können sie durch Druckeinwirkung und/oder Wärmeeinwirkung miteinander verschmolzen werden, so daß eine homogene Verbindung bzw. Verschmelzung entsteht, die den Forderungen bezüglich Dichtigkeit und Festigkeit voll entspricht. Wenn nun die äußere Folie 2 ausreichend vernetzt und gereckt ist, erfolgt bei Wärmezufuhr auch eine Schrumpfung der gesamten Umhüllung 6, so daß sie dadurch dicht und fest sitzend auf dem umhüllten Gegenstand aufgeschrumpft ist.

Die Figur 2 zeigt ein weiteres Ausführungsbeispiel gemäß der Erfindung, wobei die Stoßstellenbereiche 5 durch die stumpf aufeinander treffenden und miteinander verschweißten Enden der inneren Folie 3 gebildet werden. Auf diese Weise erhält man eine Umhüllung ohne abstehende Randprofilierung. Die übrigen Verhältnisse gleichen denen des vorhergehenden Ausführungsbeispiels.

Zusätzlich können bei Bedarf noch weitere Folien oder Beschichtungen aufgetragen werden, zum Beispiel in Form von flächenhaft aufgebrachten Klebern im Inneren oder von zusätzlichen Permeationsfolien zum Beispiel aus Aluminium.

Die Bildung der Vorformen kann beispielsweise durch Reckung oder durch ein Tiefziehverfahren erfolgen. Die vorangehende Vernetzung kann in der an sich bekannten Weise durch energiereiche Bestrahlung oder durch ein chemisches Vernetzungsverfahren vorgenommen werden.

**Patentansprüche**

1. Umhüllung aus polymerem Kunststoff für Gegenstände, insbesondere für elektrische Baugruppen oder Kabelverbindungen,
**dadurch gekennzeichnet,**
daß mindestens zwei Folien (2, 3) aus polymerem Kunststoff flächenhaft fest miteinander zu einem Folienverbund (2 - 3) verbunden sind, daß die Folien (2, 3) unterschiedlich vernetzungsfähig sind und daß in den Stoßstellen (4, 5) der Umhüllung (6) jeweils die nicht oder zumindest wenig vernetzten Folien (3) aufeinander liegen und daß die nicht oder zumindest wenig vernetzten Folien (3) in den Stoßstellen (4, 5) miteinander durch Druck und/oder Wärmezufuhr verschweißbar sind.

2. Umhüllung nach Anspruch 1,
**dadurch gekennzeichnet,**
daß die Stoßstelle (4) der Umhüllung (6) als flanschartiger Ansatz ausgebildet ist.

3. Umhüllung nach Anspruch 1,
**dadurch gekennzeichnet,**
daß die zu verbindenden Stoßstellen (5) der Umhüllung (6) stumpf aufeinander stoßend verschweißt sind.

4. Umhüllung nach einem der vorhergehenden Ansprüche,
**dadurch gekennzeichnet,**
daß eine Folie (2), vorzugsweise die außen liegende, wärmeschrumpfbar ist.

5. Umhüllung nach einem der vorhergehenden Ansprüche,
**dadurch gekennzeichnet,**
daß die Umhüllung (6) als Vorform bereits vorgebildet ist, vorzugsweise durch ein Tiefziehverfahren.

6. Umhüllung nach einem der vorhergehenden Ansprüche,
**dadurch gekennzeichnet,**
daß die Folien (2, 3) miteinander verpreßt sind.

7. Umhüllung nach einem der Ansprüche 1 bis 5,
**dadurch gekennzeichnet,**
daß die Folien (2, 3) miteinander verklebt sind, vorzugsweise mittels Haftvermittler.

8. Umhüllung nach einem der vorhergehenden Ansprüche,
**dadurch gekennzeichnet,**
daß der Folienverbund (2 - 3) zumindest teilflächig eine permeationsdichte Beschichtung, vorzugsweise aus Aluminium und vorzugsweise auf der Innenseite, aufweist.

9. Verfahren zum Herstellen einer Umhüllung (6) für Gegenstände (1), insbesondere für elektrische Baugruppen oder Kabelverbindungen mit Hilfe eines Folienverbundes (2 - 3) nach einem der vorhergehenden Ansprüche 1 bis 8,
**dadurch gekennzeichnet,**
daß zwei unterschiedlich vernetzbare Folien (2, 3) aus polymerem Kunststoff flächenhaft zu einem Folienverbund (2 - 3) fest aufeinander haftend verbunden werden, daß der Folienverbund (2 - 3) einem Vernetzungsprozeß ausgesetzt wird, daß der vernetzte Folienverbund (2 - 3) durch Strecken oder Tiefziehen in eine der Endform entsprechenden Vorform mit vorzugsweise größeren Abmessungen als die Endform verformt wird, wobei die nicht oder wenig vernetzte Folie (3) des Folienverbundes (2 - 3) auf der späteren Innenseite der Umhüllung (6) liegt, daß beim Schließen der Umhüllung (6) die aufeinander liegenden Stoßstellen (4, 5) unter Druckanwendung und/oder Wärmezufuhr miteinander verschmolzen werden.

10. Verfahren zum Herstellen einer Umhüllung (6) für Gegenstände (1), insbesondere für elektrische Baugruppen oder Kabelverbindungen mit Hilfe eines Folienverbundes (2 - 3) nach einem der Ansprüche 1 bis 8,
**dadurch gekennzeichnet,**
daß eine vernetzte Folie (2) und eine unvernetzte bzw. wenig vernetzte Folie (3) aus polymerem Kunststoff flächenhaft zu einem Folienverbund (2 - 3) fest aufeinander haftend verbunden werden, daß der Folienverbund (2, 3) durch Strecken oder Tiefziehen in eine der Endform entsprechenden Vorform mit vorzugsweise größeren Abmessungen als die Endform verformt wird, wobei die nicht bzw. wenig vernetzte Folie (3) des Folienverbundes (2 - 3 ) auf der späteren Innenseite der Umhüllung (6) liegt, daß beim Schließen der Umhüllung (6) die aufeinanderliegenden Stoßstellen (4, 5) unter Druckanwendung und/oder Wärmezufuhr miteinander verschmolzen werden.

11. Verfahren zum Herstellen einer Umhüllung nach Anspruch 9 oder 10,
**dadurch gekennzeichnet,**
daß die Umhüllung (6) durch Wärmezufuhr auf den umhüllten Gegenstand (1), vorzugsweise eine elektrische Baugruppe oder Kabelverindung, aufgeschrumpft wird.

FIG 1

FIG 2

Europäisches
Patentamt

**EUROPÄISCHER RECHERCHENBERICHT**

Nummer der Anmeldung

EP    92 10 6022

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 009 087 (RAYCHEM CORPORATION) | 1,4,8,9, 11 | B29C61/06 H02G15/18 |
| | * das ganze Dokument * | | |
| Y | | 2,5,7 | |
| | --- | | |
| Y | DE-A-1 769 510 (ALKOR-WERK, KARL LISSMANN KG) * Seite 4, Zeile 9 - Seite 5, Zeile 6; Abbildung 3 * | 2,7 | |
| | --- | | |
| Y | EP-A-0 065 278 (FELDMÜHLE AKTIENGESELLSCHAFT) * Zusammenfassung * | 5 | |
| A | | 9-11 | |
| | ----- | | RECHERCHIERTE SACHGEBIETE (Int. Cl.5) B29C |

Der vorliegende Recherchenbericht wurde für alle Patentansprüche erstellt

| Recherchenort | Abschlußdatum der Recherche | Prüfer |
|---|---|---|
| DEN HAAG | 15 JULI 1992 | LANASPEZE J.P.Y. |